# EUROPEAN PATENT SPECIFICATION

(11) **EP 2 524 882 B1**
(45) Date of publication and mention of the grant of the patent: **19.11.2014**
(21) Application number: 11166671.5
(22) Date of filing: 19.05.2011
(51) Int. Cl.: B65G 1/08, B65G 13/12

(54) **Component feeding system of at least an assembly line**
Komponentenzuführsystem für mindestens eine Montagelinie
Système de montage de composants pour au moins une ligne d'assemblage

(43) Date of publication of application: 21.11.2012
(73) Proprietor: IVECO S.p.A., 10156 Torino (IT)
(72) Inventor: Bolpagni, Fabio, 25075 Nave (IT)
(74) Representative: Gervasi, Gemma

(56) References cited:
- US-A1- 2002 159 865
- US-A1- 2010 300 841

## Description

### Application field of the invention

The present invention relates to the field of the component feeding systems of at least an assembly line and, in particular, of assembly lines of motor vehicle components, specifically of industrial vehicles. In particular the invention relates to a system for sorting components, delivered by means of appropriate containers.

US2010/300841 shows all the features of the preambles of claims 1, 4 and 9.

### Description of the prior art

Motor vehicle components are stored in a warehouse. Depending on the distribution of the assembly stations of an assembly line, an electric tractor tows one or more trolleys which contain the components that have to be distributed to said assembly stations.

According to the current feeding system, each trolley is preferably intended to feed a station of a line. Thus, the operator driving the tractor couples the tractor to the trolleys, which were previously loaded by other operators, in the warehouse, drives them in the vicinity on an assembly line, releases a full trolley and couples an empty one in order to drive it in the warehouse, where it will be exchanged with a full trolley to start again the feeding tour of the assembly line.

Each trolley may be dimensioned in order to contain exactly the number of components that are necessary to complete an operation schedule.

According to what is provided by the current handling systems, most of the operations are done by persons.

On the other hand, the automation of the feeding systems is particularly expensive for different reasons.

Firstly it should be considered that the length of the assembly lines depends on the type of vehicle, which may vary over time. Thus the space can be divided and exploited in a different way. This remarkably affects the constructions relating to the space allocation and in particular to the electricity supply for the automation of all the operations performed both in the warehouse and at the assembly line. Furthermore, also the warehouse may be modified over time, in order to adapt to variations of the production needs. Thus here also, the electricity supply and the automation of the feeding of the components that fill the trolleys are expensive, above all if the operations of the warehouse automation are intended to be put in relation with the loading of the trolleys.

On the other hand, even in presence of automation systems both in the warehouse and at the assembly line, a human contribution is still necessary to exchange full trolleys with empty ones and vice versa.

The problems mentioned above are even more serious considering that the dimensions of motor vehicle components may vary greatly: from a few centimetres of a caliper, to about two metres of a bumper.

Moreover, further constraints must be added to the constraints mentioned above, to ensure the safety of the operators.

The areas crossed by the tractors with their respective trolleys are forbidden to anyone except the drivers of the tractors.

Thus, a further problem arises, which is the need for non-restricted areas, where the trolleys can be loaded or manually led by other people than the tractor's operators, and then coupled to the tractor.

### Summary of the invention

Therefore the aim of the present invention is to overcome all the aforementioned drawbacks and to provide a component feeding system of at least an assembly line.

The object of the present invention is a component feeding system of at least an assembly line, according to claim 9.

Advantageously, the present invention allows to sort the components necessary for feeding an assembly line, without any automation and therefore without electrifying the trolleys travelling in convoy between the warehouse and the assembly line and without electrifying the loading and unloading stations of the trolleys.

Such system is particularly suitable for the production plants where the components are delivered by means of containers. Preferably the containers are suitable to keep the components they contain in a position of grasp already oriented for their assembly on the vehicle.

As it will be explained later, from the loading station, warehouse side, to the unloading station, assembly line side, through the sorting trolley, an ideally continuous inclined path is defined, wherein containers full of components travel. On the contrary, between the assembly and the loading station, through the sorting trolley, an ideally continuous inclined path is defined, wherein empty containers travel. Thus both the stations and the trolley comprise one upper chute and one lower chute. In fact, according to the needs, the inclinations of the chutes may be varied reciprocally, without departing from the scope of the invention.

Another object of the present invention is also a sorting trolley, according to claim 1, which, according to a preferred embodiment, comprises a supporting frame
- an upper inclined plane having a first inclination with respect to a horizontal plane
- a lower inclined plane having a second inclination opposite to said first inclination, said first and second inclination being transversal to a direction of travel of the trolley. Said inclined planes being preferably horizontally pivoted in order to increase their inclination and each plane is kept in its minimum inclination position by means of respective load springs.
It is also object of the present invention a second station according to claim 4, which, according to a preferred embodiment, comprises a supporting frame, a third upper inclined plane having a first inclination with respect to a horizontal plane, a third lower inclined plane having a second inclination opposite to the direction of said first inclination, said first and second inclination being suitable to move a full container closer to an operator and to move an empty container away from the operator.

The second station comprises also an exchange chute, in the vicinity of the assembly line, hinged to the frame so that it takes two positions:
a first position wherein it is the ideal extension of the third upper plane and a second position wherein it is the ideal extension of the third lower plane; and further comprises means for operating the exchange chute suitable to put an emptied container on the third lower inclined plane.
Another object of the present invention is an operating method of the system according to claim 12.

The claims are an integral part of the present invention.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
- figure 1 shows a feeding step of a loading station,
- figures 2 and 3 show respectively a sorting trolley approaching a loading station and a feeding trolley approaching an assembly station,
- figure 4 shows an instant following the approaching of the sorting trolley to the assembly station, determining an exchange of containers,
- figure 5 shows an integration of a loading station within a warehouse,
- figures 6 and 8 show detailed views, perpendicular between each other, of a sorting trolley,
- figure 9 shows a detailed side view of an assembly station,
- figure 10 shows schematically the back and forth travel of the containers, being respectively empty and full.

In the figures the same reference numbers and letters identify the same elements or components.

### Detailed description of preferred embodiments of the invention

With reference to the figures, the system that is object of the present invention comprises essentially
- one or more sorting trolleys 5, in the following called trolley, preferably in cascade connection with a tractor, e.g. per se known in the art,
- a first exchange station 3 for exchanging full containers with empty ones, placed in the warehouse or at the side of the area of the warehouse, in the following called loading station,
- a second exchange station 7 for exchanging empty containers with full ones, placed along or at the side of the area of the warehouse, in the following called assembly station.

For the sake of simplicity, full containers are marked by two crossing diagonals, while empty ones are marked by one single diagonal.

As it will be clearer later, both the exchange stations and the trolleys contain an upper chute SS for the full containers and a lower chute SI for the empty containers.

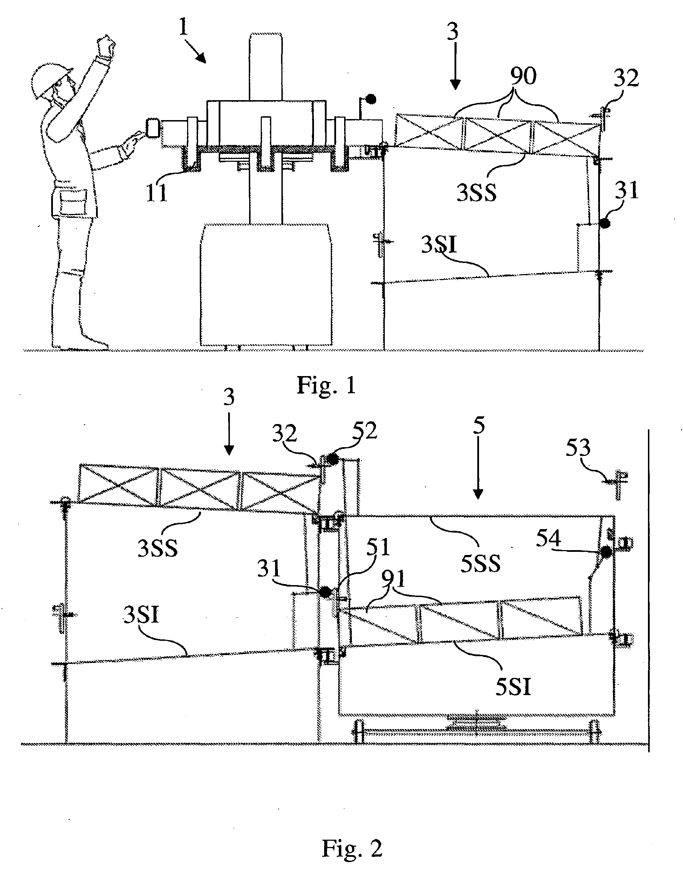

Figure 2 to figure 4 show the sequence of the various approach instants of a trolley 5 to the two aforementioned types of stations 3, 7.

Figure 1 shows the loading with full containers 90 of the upper chute 3SS of the first station 3, from the side of the warehouse.

Figure 2 shows the approach of a trolley 5 to the first station 3. It is evident that if the station is loaded from the left side, wherein the operators may circulate, the trolley 5 approaches the first station from the right side.

Figure 2 shows the instant preceding the exchange of containers. The trolley 5 carries the empty containers 91 on its lower chute 5SI. As soon as the exchange starts, the full containers move from the chute 3SS to the chute 5SS, while the empty trolleys move from the chute 5SI to the chute 3SI.

As it can be seen in the figures, at least when they are loaded, the chutes are inclined so that they exchange containers by means of the sliding of the containers themselves, namely without the help of any manual or motorized handling means.

Thus both the trolley and the stations comprise upper inclined planes for full containers and lower inclined planes for empty containers which ideally are continuous between the stations, passing from the trolley. Such inclined planes define some chutes, since they comprise surfaces or rollers or bearings suitable for facilitating the sliding of the containers.

As it will be clear in the following, it is preferable that some chutes are horizontally pivoted.

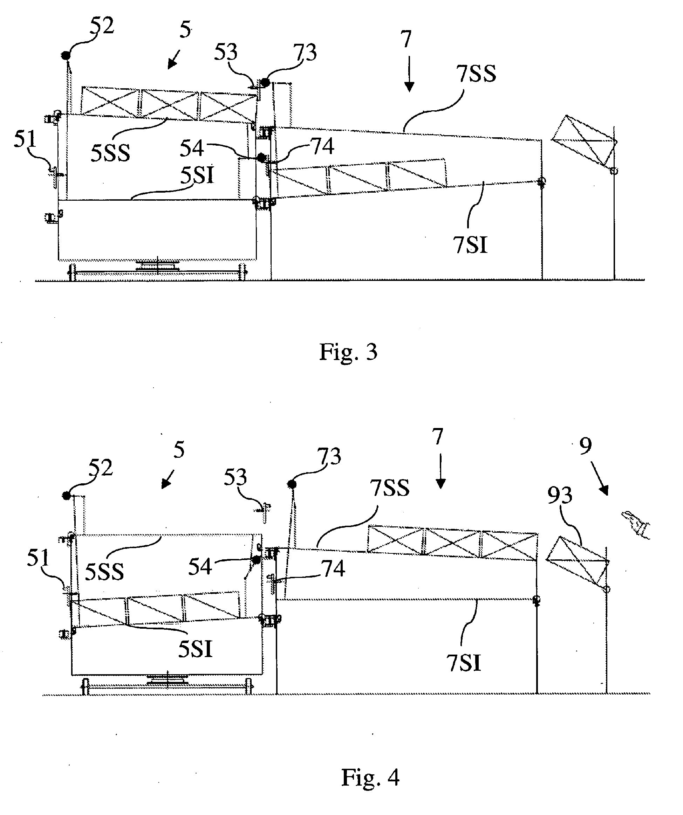

Figure 3 shows a trolley 5 approaching a station 7 from the left side. This implies that operators may approach the station 7 from the right side.

Figure 3 shows, as in figure 2, an instant preceding the exchange of containers 90, 91.

On the contrary, figure 4 shows that, an instant after the exchange, the full containers lie on the upper chute 7SS of the second station 7, while the lower chute 7SI is devoid of any container.

With particular reference to figures 3 and 4 it can be noted that the number of containers in the upper chute of the line station 7 is one unit more than the unloaded containers. This is preferable in order to ensure a continuous feeding of material to the assembly operator. As the containers are emptied, they pass to the lower chute 7SI of the assembly station 7. When the last full container 90 is left, a trolley 5 collects the empty containers and unloads the same number of full containers.

A first fundamental concept of the invention is that the handling of the containers, both full and empty, is performed between the stations and the trolley, just thanks to the force of gravity.

The exchange of the containers is performed by means of release means cooperating with check means of the trolleys. Such cooperation is realized by the passage of the trolley in correspondence of the stations. Such release/check means are preferably mechanical, so that, also in this case, it is not necessary to provide switches, motors and automation means in general that will need electric energy.

According to the alternative embodiment shown in the figures, said release means are also realized/connected in order to allow the release of the check means and thus the unloading of full containers only when the empty containers are ready to be collected.

Firstly, it is worth noting that the upper chute of the loading station 3 is horizontally pivoted, while the lower chute is fixed. Symmetrically, the upper chute of the assembly station 7 is fixed while its lower chute is horizontally pivoted. When the full containers 90 are correctly positioned on the upper chute of the first station, the latter pivots, for example thanks to the action of a load spring, determining a positioning of the release means 31 such that it cooperates with a respective check means 51 of the trolley 5 suitable for retaining the empty containers 91 in the lower chute 5SI.

As it will be explained below, the check means are substantially fixed to the respective structure, both of the stations and of the trolley, while the release means are moved by the weight of the containers.

Also the lower chute 5SI of the trolley is horizontally pivoted. The lowering of the lower chute 5SI of the trolley 5 determines also the positioning of the release means 52 integral with the trolley 5 in order to cooperate with the check means 32 of the upper chute 3SS of the loading station 3.

Considering now figure 4 it can be seen that the trolley 5 has already unloaded the full containers and collected the empty ones, thus the release means are no longer in a position wherein they can cooperate with the check means. With reference to figure 3, an instant before the exchange, the lower chute 7SI of the line station 7 is empty, its respective release means 73 are lowered due to the pivoting of the chute itself and can cooperate with the check means 53 of the trolley to release the sliding of the full containers from the upper chute 5SS. In the same way, the upper chute 5SS of the trolley is lowered, which determines that the release means 54 associated with the upper chute 5SS, are in position to cooperate with the check means 74 of the lower chute 7SI of the assembly station in order to release the sliding of the empty containers 91. It is evident that when the upper chute 5SS of the trolley and the lower chute 7SI of the second station 7 are both full, then the respective release means 54 and 73, may cooperate with the check means, respectively 74 and 53, in order to enable the exchange of full containers with empty containers. Thus this happens symmetrically between the trolley and the assembly station and the trolley and the loading station.

In particular, it can be noted that the lowering of an upper horizontally pivoted chute, for example 3SS or 5SS, opens the check means of a lower chute 5SI or 7SI of the system at its right, being it a trolley or a station, namely according to the sliding direction of the full containers. In the same way, it can be noted that the lowering of a lower horizontally pivoted chute opens the check means of an upper chute 5SS or 7SS of the system at its left, being it a trolley or a station, namely according to the sliding direction of the empty containers 91.

The last chutes, both towards the line and towards the warehouse, namely respectively 7SS and 3SI, are fixed.

A second fundamental concept of the present invention is that the release means are suitable to cooperate with the respective check means thanks to the weight force which makes the chute horizontally pivot. On the contrary, their reciprocal cooperation is determined by the reciprocal movement between the trolley and the stations, resulting from the traction of the trolley towed by the tractor.

The figure shows only one trolley approaching a loading or assembly station. Actually there is a set of trolleys that, as they move, meet a series of loading stations 3, namely on the warehouse side, and perform the exchange of the containers of the first trolley, then of the second trolley, and so on. This happens in the same way on the assembly line side.

It is the interaction mechanism of the release/check means itself that ensures that the containers are loaded on the right trolleys.

Thus, advantageously, it is not the driver of the set of trolleys who determines which trolley should be filled, but everything is predetermined from the position in sequence of the stations both on the warehouse and on the line side, which make mistakes impossible. Moreover, the driver must no longer exchange the trolleys coupling or uncoupling the set of trolley, since the trolleys are not exchanged or uncoupled, but only the full/empty containers are. Thus a lot of time is saved, since the driver has just to follow a path and to stop in the vicinity of each station in order to allow the transit of the containers 90 and 91 and after that to drive off again.

Consider that the system shown here would work also with a manually driven sorting trolley 5.

In order to simplify the driver's task, aid systems may be provided, for example remote controlled assistance systems, or constrained and/or checking systems. Such aspect will be described later.

The empty containers may be collected from the first station 3 in different ways, for example by arranging an appropriate platform that, once it is filled again, it may be lifted in order to load the upper chute 3SS of the loading station 3, preferably in a following cycle.

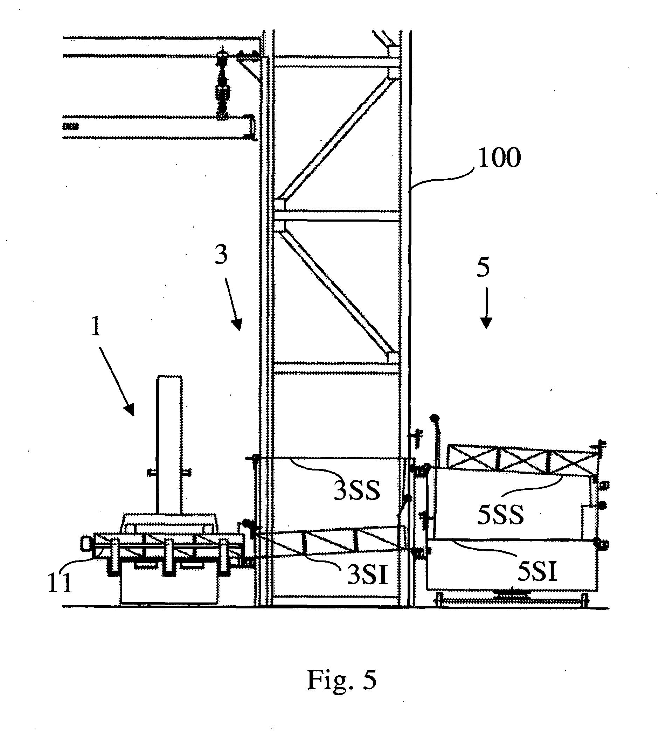

The loading/unloading of the containers must not be necessarily synchronous, thus a movable plane 11, for example of a lift truck 1, lifts and, once it reaches a predetermined level, releases the full containers in the upper chute 3SS, after that it lowers waiting for an exchange with a trolley 5. After that, the empty containers 91, passing through the lower chute 3SI, settle on said movable plane 11 in order to be filled and lifted back again to the upper chute 3SS. Preferably the loading station 3 on the warehouse side is integrated directly in the shelving 100 of a warehouse. See for example figure 5. This advantageously allows to respect immediately the concept of separation between the areas used for the transit of the trolleys and the areas used by the operators.

Consider that, said separation is advantageous anyway, also in those cases where the containers are automatically filled by robots and the like, because it protects the driver of the set of trolleys 5.

With particular reference to figure 4, the container being worked on 93 is inclined towards the assembly operator 9, with an inclination that is preferably higher than the one of the upper chute 7SS of the station 7. The station 7, as it will be showed in the following, comprises a system to move forward one container 90 at a time in order to bring it in position of withdrawal of the component/s it contains. Once it is empty, said system allows to drive the containers on the lower chute 7SI in order to receive an empty container coming from the upper chute 7SS.

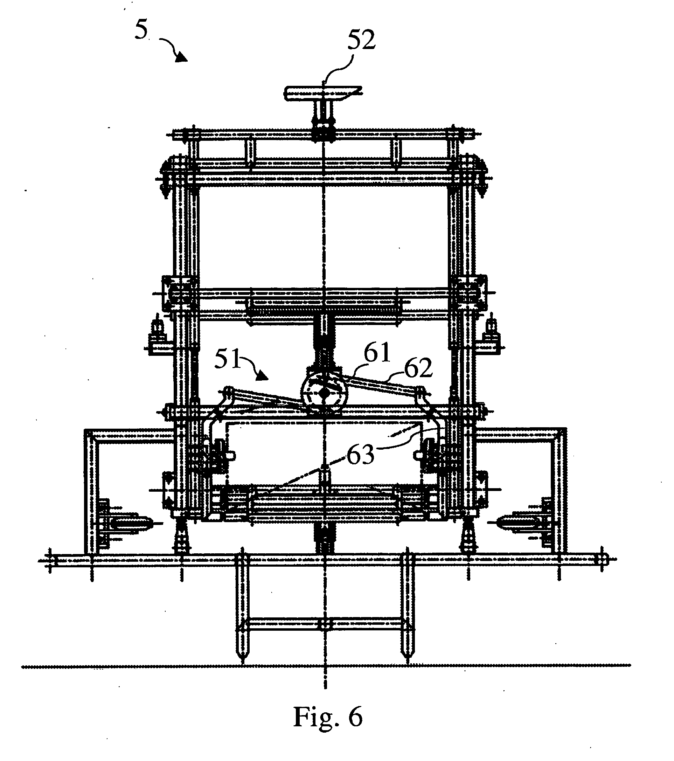

With reference to the figures 6, 7 and 8, an example of trolley 5 is shown according to different views.

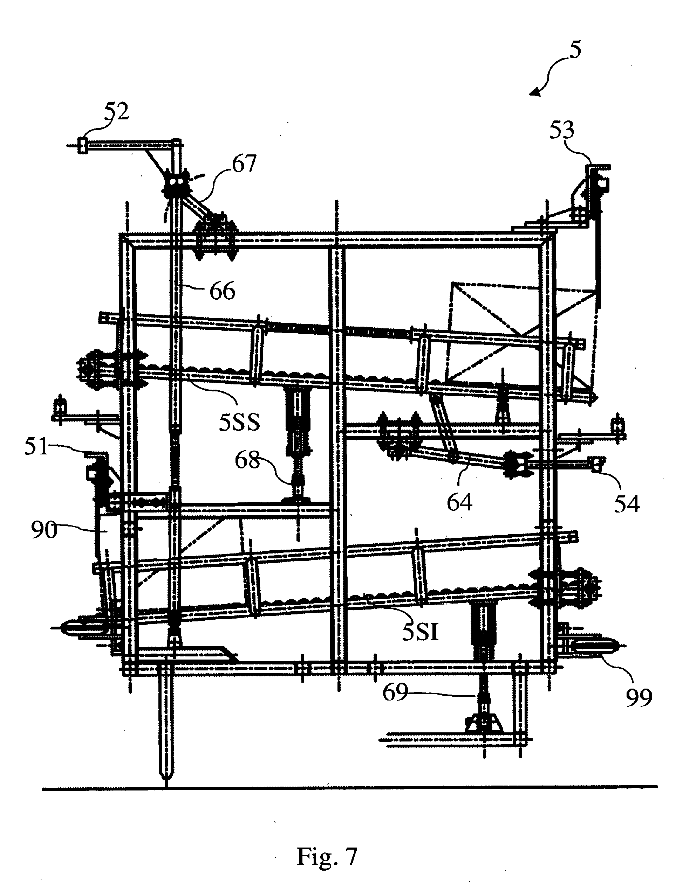

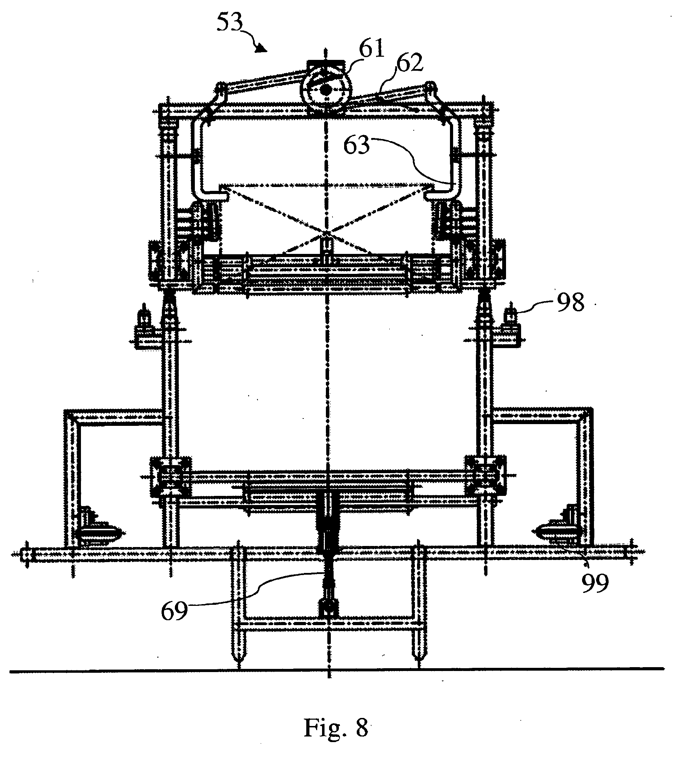

Figure 6 shows a front view from the left of the trolley 5 according to any of the previous figures or according to the side figure 7. Figure 8, instead, shows a front right view of the same trolley.

Check means 51, similarly to check means 53 or 32 or 74, comprise preferably
- a plate 61 rotatably associated to the structure of the trolley or station to which the chute whose containers it checks is fixed, the plate rotating according to a vertical plane tangent to the moving direction of the set of trolley,
- at least a rod 62 hinged in a middle position, the fulcrum, to the same structure and at one end to the plate 61 by means of a transmission 61.

A rotation of the plate makes such rod 62 rotate with respect to the fulcrum, between an interference position with respect to the sliding of the containers and a non interference position with respect to it.

The retain means, for example 31, which cooperate with said check means, comprise a tapered object, said hammer, in the direction of forward movement of the trolley, see figure 6, which collides with a knob or a crest, projecting from the surface of said plate 61, and makes it rotate.

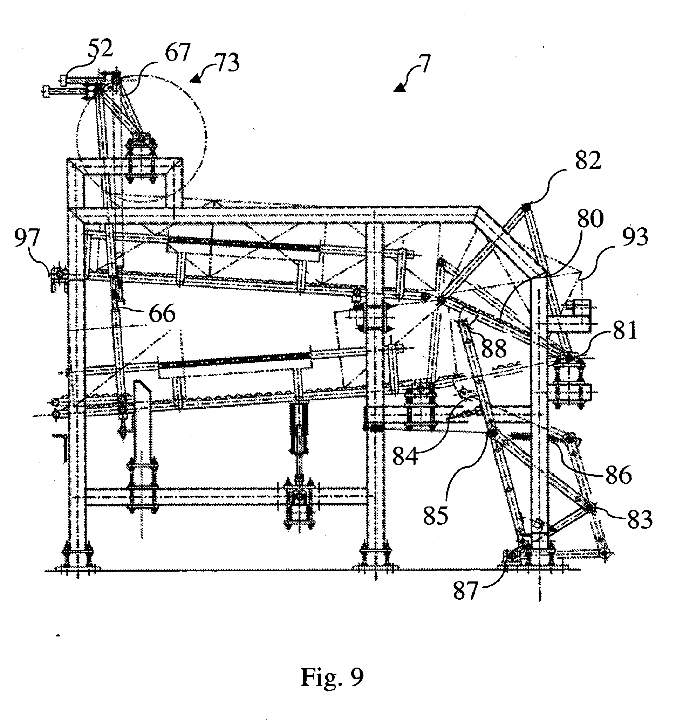

With particular reference to figure 7, the hammer 52 or 54 may be connected in various ways to a respective horizontally pivoted chute, for example in a rigid way by means of an arm 64 or by means of an overturn L-shaped arm 66, having a first end hinged to the horizontally pivoted chute 5SI and a second end connected with said hammer, while in a central position it is hinged to a first end of a connecting rod whose second end is hinged in the structure of the trolley. Figure 9 shows the possible movements of the hammer 73. More sophisticated handling systems may be provided, for example by means of double hinges, in order to guarantee a perfectly vertical lifting and lowering of the hammer, or a lateral projecting or retraction movement with respect to the trolley. Such alternative embodiments can be realized by the person skilled in the art.

With reference to figure 7, load springs 68 e 69 are illustrated, which, when there are no containers on the respective upper and lower chute, bring the chutes in raised position, consequently making the hammers move away from the position wherein they can hit the plates 61.

With reference to figure 9 a second station 7, side assembly line, is shown in detail.

Such station comprises, as said above, an upper fixed chute and a lower horizontally pivoted chute.

More in detail, it can be seen that the upper opening of container being worked on 93 is turned towards the right, namely towards the withdrawal direction of the components contained in the container.

This is realized by means of an exchange chute 80.

Such chute is hinged at its end 81, thus it cannot pivot under certain conditions. The exchange chute is supported by a rod in two pieces 84, the so-called toggle. The latter is hinged at an upper end 88 to a lower part of the exchange chute and at a lower end to the frame of the station. The rod in two pieces 84 has a middle articulation 85 such that the upper part may rotate only counter clockwise with respect to the lower part.

A traction spring 86 is placed between said articulation 85 and the frame, in order to avoid such rotation of the two parts of the rod 84, keeping the rod pointing against the lower part of the exchange chute.

A projecting pedal 83 is connected to the lower part of the two-piece rod 84 from the side that induces the breaking of the rod. A pressure on the pedal 83 that overcomes the traction of the spring 86 determines a clockwise rotation of the lower part of the rod and a counter clockwise rotation of the upper part of the rod. Thus the exchange chute lowers in order to allow the container 93 (presumably empty) to be placed on the lower chute 7SI. Any other container 90 cannot move forward on the exchange chute until the container 93 is on the exchange chute. During the exchange rotation of the chute, there is a condition wherein the bulk of the container 93 is no longer able to hinder the forward movement of a following full container 90. The arm 82 is connected to the exchange chute so that it can continue blocking the following container 90 when the container 93 is on the lower chute. Once the exchange chute is free, its lifting frees said arm 82, thus next full container 90 may be put on the exchange chute 80.

As it can be noted, also in this case, the containers move substantially thanks to the force of gravity and to low-effort manual operations.

Advantageously, the exchange chute is placed so that it is within an interval of heights from the ground which facilitates the assembly operator.

It is also clear that, a simple pressure on the pedal allows the operator to move away an empty container, without having to seize, lift and move it.

A preferred operating method of a system that is object of the present invention comprises at least the following steps in a cyclical sequence:
- filling of containers and placing of said first upper chute 3SS, when a sorting trolley 5 approaches said at least a first station 3 and contains empty containers 91 in a respective second lower plan 5SI,
- simultaneous exchange of empty 91 and full 90 containers between said at least a first station and said sorting trolley,
- directing the approach of the sorting trolley 5 to at least a second station 7, when the trolley approaches said at least a second station 7, if the latter contains empty containers 91 in a respective third lower chute 7SI,
- simultaneous exchange of empty 91 and full 90 containers between said sorting trolley and said second station,
- directing the approach of the sorting trolley 5 to at least a first station 3.

From what is described above it is clear that the trolley 5 approaches the stations 3 and 7 in a tangential way, even though it is possible to provide that, when the convoy passes, the trolley comprises means for moving transversally with respect to the direction of movement of the trolley convoy, in order to approach the stations in a frontal way, rather than in a tangential way. It is evident that this needs the presence of electric motors and similar organs which can be power supplied by the tractor, without, again, any construction for electricity supply/automation of areas of the plant.

As regards the driving assistance for the convoy's driver, various systems are known, which are based for example on a magnetic strip drowned in the floor.

A preferred driving assistance system provides the setting of coloured strips on the floor and the presence of a laser pointer mounted on the tractor which indicates, at a predetermined distance from the tractor, the centre line of the tractor itself. Thus the driver has just to ensure that the light point is within said coloured strips on the floor. Moreover, in the vicinity of the stations, on the coloured strip, for example white coloured, there is a differently coloured circle, which indicates the point where the light point should be projected so that the release means may correctly cooperate with the check means.

According to further alternative embodiments, in correspondence of the exchange station, slight depressions on the floor can be provided, so that one wheel of the tractor is automatically pulled there, due to the weight force.

Furthermore, in order to allow a perfect alignment between the convoy and the stations, rubber wheels 99 are provided rotating in a horizontal plane and placed along the sides of the trolley, or, as an alternative, along the sides of the stations 3 and 7, see figures 7 and 8, between the trolley and the stations suitable to deaden blows and bushes 98 cooperating with guides 97 are also provided, see respectively figure 8 and 9. During the approach, the return bushes engage into the guides 97 which perform a sort of returning action aligning the trolley with respect to the station. It is clear that this is valid for both station types.

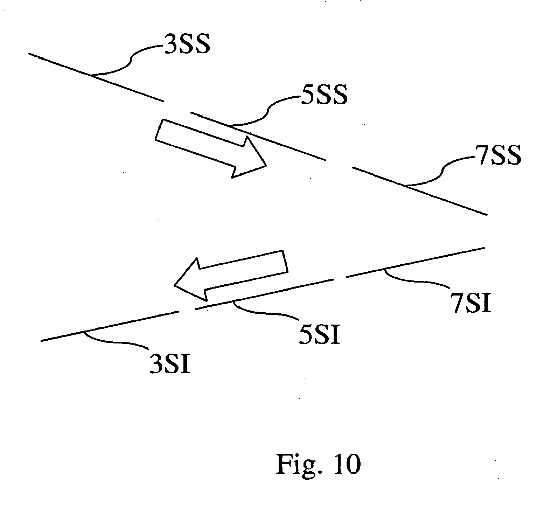

Figure 10 shows schematically both the upper and the lower chute, in order to show better the concept of ideally continuous path between first station, trolley, second station and back.

In the interconnection points between the chutes tips may be provided.

It will be apparent to the person skilled in the art that other alternative and equivalent embodiments of the invention can be conceived and reduced to practice without departing from the scope of the invention as defined by the appended claims.

From the description set forth above it will be possible for the person skilled in the art to embody the invention with no need of describing further construction details. The elements and the characteristics described in the different preferred embodiments may be combined without departing from the scope of the present invention.

## Claims

1. Sorting trolley (5) for a component feeding system according to any of claims 9-11, comprising
- a supporting frame
- a second upper inclined plane (5SS) having a first inclination with respect to a horizontal plane
- a second lower inclined plane (5SI) having a second inclination opposite to said first inclination, said first and second inclination being transversal to a direction of travel of the trolley,
**characterized in that**
said second inclined planes (5SS, 5SI) are horizontally pivoted in order to increase their inclination and wherein each plane is kept in its minimum inclination position by means of respective load springs (68, 69)
and **in that** said trolley further comprises first and fourth release means (52, 54) connected mechanically with said second lower inclined plane (5SI) and said second upper inclined plane (5SS) respectively and wherein said second lower (5SI) and upper (5SS) inclined plane are horizontally pivoting due to the effect of the weight of the respectively empty (91) and full (90) containers placed on them against the thrust of said load springs (68, 69); the first and fourth release means (52, 54) being in position of cooperation with respective first and fourth check means (32, 74) of at least a first and second station (3,7) of the component feeding system when the respective inclined planes (5SI, 5SS) are loaded with containers (91,90).

2. Trolley according to claim 1, further comprising second and third check means (51, 53) suitable to cooperate with respective second and third release means (31, 73) of said at least a first and second station (3,7) when the respective inclined plane (3SS, 7SI) are loaded with containers (91,90).

3. Trolley according to claim 1 or 2, further comprising:
- tired wheels (99) lying in a horizontal plane disposed along the sides of the trolley and/or
- return bushes (98) suitable to cooperate with respective return guides (97) of said first or second station (3,7) in order to guarantee a perfect alignment of the trolley with respect to the stations.

4. Second station (7) for a component feeding system according to any of claims 9-11, comprising
- a supporting frame
- a third upper inclined plane (7SS) having a first inclination with respect to a horizontal plane
- a third lower inclined plane (7SI) having a second inclination opposite to said first inclination, said first and second inclinations being suitable to drive a full container (90) towards an assembly operator (100) and to drive an empty container (91) away from an assembly operator, and comprising fourth check means (74) suitable to avoid an inconvenient sliding of empty containers (91) from the lower inclined plane (7SI) and suitably to cooperate with fourth release means (54) of a sorting trolley; the second station further comprising third release means (73) suitably to cooperate with third check means (53) of a sorting trolley, when said trolley approaches the second station, **characterized in that** said second inclined plane (7SI) is kept in its minimum inclination position by means of respective load spring and is horizontally pivoted in order to increase is inclination due to the effect of the weight of the respectively empty containers (91) placed on it against the thrust of said load spring; the third release means (73) being in position of cooperation with respective third check means (53) of said sorting trolley when the respective inclined plane (7SI) is loaded with empty containers (91).

5. Second station (7) according to claim 4, further comprising
- an exchange chute (80), in the vicinity of the assembly line, hinged to the frame in order to take two positions:
. a first position wherein it is the ideal continuation of the third upper plane (7SS)
. a second position wherein it is the ideal continuation of the third lower plane (7SI)
- activation means (84, 86, 83) of the exchange chute (80) suitable to place an emptied container (93) on the third lower inclined plane (7SI).

6. Second station (7) according to claim 5, wherein said activation means (84, 86, 83) of the exchange chute (80) are driven by a pedal (83).

7. Second station (7) according to claim 5, further comprising stop means (93,82) of the forward movement of a following full container (90) until the exchange chute is free (80).

8. Second station (7) according to claim 5, further comprising return guides (97) suitable to cooperate with return bushes (98) of said at least a sorting trolley (5) in order to guarantee a perfect alignment between the second station (7) and the trolley (5).

9. Component feeding system of at least an assembly line, wherein the components are sorted in containers (90,91) comprising
- at least a first station (3) placed within or at the side of a warehouse area,
- at least a second station (7) placed along or at the side of an assembly line,
- at least a sorting trolley (5) movable between said first station (3) and said second station (7)
wherein
- said at least a first station (3) comprises a first upper inclined plane (3SS)
- said at least a sorting trolley (5) comprises a second upper inclined plane (5SS)
- said at least a second station (7) comprises a third upper inclined plane (7SS)
said upper inclined planes (3SS,5SS,7SS), defining ideally a single continuous inclined path, when the sorting trolley (5) approaches the stations (3,7), adapted to be passed through by said containers full of components to be used in the assembly line, by the force of gravity,
and wherein
- said at least a first station (3) comprises a first lower inclined plane (3SI)
- said at least a sorting trolley (5) comprises a second lower inclined plane (5SI)
- said at least a second station (7) comprises a third lower inclined plane (7SI)
said lower inclined planes (3SI, 5SI, 7SI), defining ideally a single continuous inclined path, when the sorting trolley (5) approaches the stations (3,7), adapted to be passed through by empty containers to be filled in the warehouse, by the force of gravity,
said first station (3) comprising first check means (32) suitable to avoid an inconvenient sliding of full containers (90) from the upper inclined plane (3SS); the check means (32) being suitably to cooperate with the first release means (73) of the sorting trolley when said trolley approaches said first station, and second release means (31), **characterized in that**, when full containers (90) are correctly positioned on the upper inclined plane (3SS) of the first station (3), the latter pivots, thanks to the action of a load spring, determining a positioning of the release means (31) suitable to cooperate with a respective second check means (51) of the trolley (5) suitable for retaining the empty containers (91) in the lower inclined plane (5SI) of the trolley.

10. System according to claim 9, wherein said sorting trolley (5) is according any of the claims from 1 to 3.

11. System according to any claim from 9 - 10, wherein said second station (7) is according to any of the claims from 4 to 8.

12. Operating method of a system according to claims from 9 to 11, comprising at least the following steps in a cyclical sequence:
- filling of containers for making them full and placing of said first upper plane (3SS), when a sorting trolley (5) approaches the at least a first station (3) and contains empty containers (91) in a respective second lower plane (5SI),
- simultaneous exchange of empty (91) and full (90) containers between said at least a first station and said sorting trolley,
- directing the sorting trolley (5) and approaching of at least a second station (7), when the trolley approaches said at least a second station (7), if the latter contains empty containers, in a respective third lower plane (7SI),
- simultaneous exchange of empty (91) and full (90) containers between said sorting trolley and said second station,
- directing the approach of the sorting trolley (5) to at least a first station (3).

## Patentansprüche

1. Sortier-Wagen (5) für ein Komponenten-Zuführsystem gemäß irgendeinem der Ansprüche 9 bis 11, umfassend:
- einen tragenden Rahmen;
- eine zweite obere geneigte Ebene (5SS) mit einer ersten Neigung in Bezug auf eine horizontale Ebene;
- eine zweite untere geneigte Ebene (5SI) mit einer zweiten Neigung entgegengesetzt der ersten Neigung, wobei die erste Neigung und die zweite Neigung quer zu einer Fahrtrichtung des Wagens sind;
**dadurch gekennzeichnet, dass**
- die zweiten geneigten Ebenen (5SS, 5SI) horizontal geschwenkt sind, um ihre Neigung zu erhöhen, und wobei jede Ebene in ihrer minimalen Neigungs-Position mittels jeweiliger Spannungs-Federn (68, 69) gehalten wird;
und dadurch, dass der Wagen weiter umfasst:
- erste und vierte Löse-Einrichtungen (52, 54), die mechanisch mit der zweiten unteren geneigten Ebene (5SI) bzw. der zweiten oberen geneigten Ebene (5SS) verbunden sind, und worin die zweite untere geneigte Ebene (5SI) und die zweite obere geneigte Ebene (5SS) horizontal schwenkend sind aufgrund der Wirkung des Gewichts der jeweiligen leeren (91) und vollen (90) Behälter, die auf ihnen platziert sind, gegen die Spannung der Spannungs-Federn (68, 69); wobei die ersten und vierten Löse-Einrichtungen (52, 54) in einer Position des Zusammenwirkens mit jeweiligen ersten und vierten Prüf-Einrichtungen (32, 74) von wenigstens einer ersten und zweiten Station (3, 7) des Komponenten-Zuführsystems sind, wenn die jeweiligen geneigten Ebenen (5SI, 5SS) mit Behältern (91, 90) beladen sind.

2. Wagen nach Anspruch 1, weiter umfassend zweite und dritte Prüf-Einrichtungen (51, 53), die geeignet sind, mit jeweiligen zweiten und dritten Löse-Einrichtungen (31, 73) der wenigstens ersten und zweiten Station (3, 7) zusammenzuwirken, wenn die jeweiligen geneigten Ebenen (3SS, 7SI) mit Behältern (91, 90) beladen sind.

3. Wagen nach Anspruch 1 oder 2, weiter umfassend:
- bereifte Räder (99), die in einer horizontalen Ebene liegen, die entlang der Seiten des Wagens angeordnet ist, und/oder
- Rückkehr-Buchsen (98), die geeignet sind, mit jeweiligen Rückkehr-Führungen (97) der ersten oder zweiten Station (3, 7) zusammenzuwirken, um ein perfektes Ausrichten des Wagens in Bezug auf die Stationen zu garantieren.

4. Zweite Station (7) für ein Komponenten-Zuführ-System gemäß irgendeinem der Ansprüche 9 bis 11, umfassend:
- einen tragenden Rahmen;
- eine dritte obere geneigte Ebene (7SS) mit einer ersten Neigung in Bezug auf eine horizontale Ebene;
- eine dritte untere geneigte Ebene (7SI) mit einer zweiten Neigung entgegengesetzt der ersten Neigung, wobei die erste Neigung und die zweite Neigung geeignet sind, einen vollen Behälter (90) in Richtung auf einen Bediener (100) der Anlage anzutreiben und einen leeren Behälter (91) weg von dem Bediener der Anlage anzutreiben,
- und umfassend eine vierte Prüf-Einrichtung (74), die geeignet ist, ein unbequemes Gleiten von leeren Behältern (91) von der unteren geneigten Ebene (7SI) zu vermeiden, und geeignet, mit vierten Löse-Einrichtungen (54) eines Sortier-Wagens zusammenzuwirken;
wobei die zweite Station weiter umfasst:
- dritte Löse-Einrichtungen (73), die geeignet sind, mit dritten Prüf-Einrichtungen (53) eines Sortier-Wagens zusammenzuwirken, wenn sich der Wagen der zweiten Station nähert, **dadurch gekennzeichnet, dass**
- die zweite geneigte Ebene (7SI) in ihrer minimalen Neigungs-Position gehalten wird mittels einer jeweiligen Spannungs-Feder und horizontal geschwenkt wird, um ihre Neigung aufgrund der Wirkung des Gewichts der jeweiligen leeren Behälter (91), die darauf platziert werden, gegen die Spannung der Spannungs-Feder zu erhöhen, wobei die dritte Löse-Einrichtung (73) in einer Position des Zusammenwirkens mit jeweiligen dritten Prüf-Einrichtungen (53) des Sortier-Wagens sind, wenn die jeweilige geneigte Ebene (7SI) mit leeren Behältern (91) beladen wird

5. Zweite Station (7) nach Anspruch 4, weiter umfassend:
- eine Austausch-Rampe (80) in der Nähe der Montage-Linie, angelenkt an den Rahmen, um zwei Positionen einzunehmen:
▪ eine erste Position, in der sie die ideale Fortsetzung der dritten oberen Ebene (7SS) ist;
▪ eine zweite Position, in der sie die ideale Fortsetzung der dritten unteren Ebene (7SI) ist;
- Aktivierungs-Einrichtungen (84, 86, 83) der Austausch-Rampe (80), die geeignet sind zum Platzieren eines geleerten Behälters (93) auf der dritten unteren geneigten Ebene (7SI).

6. Zweite Station (7) nach Anspruch 5, wobei die Aktivierungs-Einrichtungen (84, 86, 83) der Austausch-Rampe (80) durch ein Pedal angetrieben werden.

7. Zweite Station (7) nach Anspruch 5, weiter umfassend Stopp-Einrichtungen (93, 82) der Vorwärts-Bewegung eines folgenden vollen Behälters (90), bis die Austausch-Rampe (80) frei ist.

8. Zweite Station (7) nach Anspruch 5, weiter umfassend Rückkehr-Führungen (97), die geeignet sind, mit Rückkehr-Buchsen (98) des wenigstens einen Sortier-Wagens (5) zusammenzuwirken, um ein perfektes Ausrichten zwischen der zweiten Station (7) und dem Wagen (5) zu garantieren.

9. Komponenten-Zuführsystem wenigstens einer Montage-Linie, wobei die Komponenten in Behältern (90, 91) sortiert werden, umfassend:
- wenigstens eine erste Station (3), die innerhalb oder auf der Seite eines Auslieferungslager-Bereichs platziert ist;
- wenigstens eine zweite Station (7), die entlang oder auf der Seite einer Montage-Linie platziert ist;
- wenigstens ein Sortier-Wagen (5), der zwischen der ersten Station (3) und der zweiten Station (7) bewegbar ist;
wobei
- die wenigstens eine erste Station (3) eine erste obere geneigte Ebene (3SS) umfasst;
- der wenigstens eine Sortier-Wagen (5) eine zweite obere geneigte Ebene (5SS) umfasst;
- die wenigstens eine zweite Station (7) eine dritte obere geneigte Ebene (7SS) umfasst;
- die oberen geneigten Ebenen (3SS, 5SS, 7SS) idealerweise einen einzigen kontinuierlichen geneigten Weg definieren, wenn sich der Sortierwagen (5) den Stationen (3, 7) nähert, der dafür angepasst ist, von den Behältern, die voll mit in der Montage-Linie zu verwendenden Komponenten sind, mittels Schwerkraft durchlaufen zu werden, und wobei
- die wenigstens eine erste Station (3) eine erste untere geneigte Ebene (3SI) umfasst;
- der wenigstens eine Sortier-Wagen (5) eine zweite untere geneigte Ebene (5SI) umfasst;
- die wenigstens eine zweite Station (7) eine dritte untere geneigte Ebene (7SI) umfasst;
- wobei die unteren geneigten Ebenen (3SI, 5SI, 7SI) idealerweise einen einzigen kontinuierlichen geneigten Weg definieren, wenn sich der Sortierwagen (5) den Stationen (3, 7) nähert, der dafür angepasst ist, von den leeren Behältern, die in dem Auslieferungs-Lager befüllt werden sollen, mittels Schwerkraft durchlaufen zu werden, wobei
- die erste Station (3) erste Prüf-Einrichtungen (32) umfasst, die geeignet sind, ein unbequemes Gleiten von vollen Behältern (90) von der oberen geneigten Ebene (3SS) zu vermeiden; wobei die Prüf-Einrichtungen (32) geeignet sind, mit den ersten Löse-Einrichtungen (73) des Sortier-Wagens zusammenzuwirken, wenn sich der Wagen der ersten Station nähert; und
- zweite Löse-Einrichtungen (31), **dadurch gekennzeichnet, dass** dann, wenn volle Behälter (90) korrekt auf der oberen geneigten Ebene (3SS) der ersten Station (3) positioniert sind, diese dank der Wirkung der Spannungs-Feder schwenkt, eine Positionierung der Löse-Einrichtungen (31) ermittelt, die zum Zusammenwirken mit einer jeweiligen zweiten Prüf-Einrichtung (51) des Wagens (5) geeignet ist, und geeignet ist zum Halten der leeren Behälter (91) in der unteren geneigten Ebene (5SI) des Wagens.

10. System nach Anspruch 9, wobei der Sortier-Wagen (5) ein Wagen nach irgendeinem der Ansprüche 1 bis 3 ist.

11. System nach irgendeinem der Ansprüche 9 bis 10, wobei die zweite Station (7) eine Station nach irgendeinem der Ansprüche 4 bis 8 ist.

12. Verfahren zum Betreiben eines Systems gemäß den Ansprüchen 9 bis 11, umfassend wenigstens die folgenden Schritte in zyklischer Reihenfolge:
- Befüllen von Behältern, um sie voll zu machen, und Platzieren auf der ersten oberen Ebene (3SS), wenn sich ein Sortier-Wagen (5) wenigstens der ersten Station (3) nähert und leere Behälter (91) in einer jeweiligen zweiten unteren Ebene (5SI) enthält;
- gleichzeitiges Austauschen von leeren (91) und vollen (90) Behältern zwischen wenigstens der ersten Station und dem Sortier-Wagen;
- Führen des Sortier-Wagens (5) und Annähern an wenigstens eine zweite Station (7), wenn sich der Wagen wenigstens an die zweite Station (7) annähert, wenn diese leere Behälter enthält, in einer jeweiligen dritten unteren Ebene (7SI);
- gleichzeitiges Austauschen leerer (91) und voller (90) Behälter zwischen dem Sortier-Wagen und der zweiten Station;
- Richten der Annäherung des Sortier-Wagens (5) auf wenigstens eine erste Station (3).

## Revendications

1. Chariot de tri (5) pour un système d'avance de composants selon l'une quelconque des revendications 9 à 11, comprenant :
- un cadre de support,
- un deuxième plan incliné supérieur (5SS) présentant une première inclinaison par rapport à un plan horizontal,
- un deuxième plan incliné inférieur (5SI) présentant une deuxième inclinaison opposée à ladite première inclinaison, lesdites première et deuxième inclinaisons étant transversales à une direction de déplacement du chariot,
**caractérisé en ce que**
lesdits deuxièmes plans inclinés (5SS, 5SI) sont pivotés horizontalement afin d'augmenter leur inclinaison et **en ce que** chaque plan est maintenu dans sa position d'inclinaison minimum au moyen de ressorts de suspension (68, 69) respectifs,
et **en ce que** ledit chariot comprend en outre des premiers et quatrièmes moyens de libération (52, 54) reliés mécaniquement au dit deuxième plan incliné inférieur (5SI) et au dit deuxième plan incliné supérieur (5SS) respectivement, et **en ce que** lesdits deuxièmes plans inclinés inférieur (5SI) et supérieur (5SS) pivotent horizontalement du fait de l'effet du poids des contenants respectivement vides (91) et pleins (90) placés sur ceux-ci contre la poussée desdits ressorts de suspension (68, 69) ; les premiers et quatrièmes moyens de libération (52, 54) étant dans une position de coopération avec des premiers et quatrièmes moyens de contrôle (32, 74) respectifs au moins de première et deuxième postes (3, 7) du système d'avance de composants lorsque des contenants (91, 90) sont chargés sur les plans inclinés (5SI, 5SS) respectifs.

2. Chariot selon la revendication 1, comprenant en outre des deuxièmes et troisièmes moyens de contrôle (51, 53) appropriés pour coopérer avec des deuxièmes et troisièmes moyens de libération (31, 73) respectifs desdits au moins premier et deuxième postes (3, 7) lorsque des contenants (91, 90) sont chargés sur les plans inclinés (3SS, 7SI) respectifs.

3. Chariot selon la revendication 1 ou 2, comprenant en outre :
- des roues équipées de pneumatique (99) se trouvant dans un plan horizontal disposées le long des côtés du chariot, et/ou
- des douilles de retour (98) appropriées pour coopérer avec des guides de retour (97) respectifs dudit premier ou deuxième poste (3, 7) afin de garantir un alignement parfait du chariot par rapport aux postes.

4. Deuxième poste (7) pour un système d'avance de composants selon l'une quelconque des revendications 9 à 11, comprenant :
- un cadre de support,
- un troisième plan incliné supérieur (7SS) présentant une première inclinaison par rapport à un plan horizontal,
- un troisième plan incliné inférieur (7SI) présentant une deuxième inclinaison opposée à ladite première inclinaison, lesdites première et deuxième inclinaisons étant appropriées pour entraîner un contenant plein (90) vers un opérateur d'assemblage (100) et pour entraîner un contenant vide (91) loin d'un opérateur d'assemblage, et comprenant des quatrièmes moyens de contrôle (74) appropriés pour empêcher un glissement gênant des contenants vides (91) par rapport au plan incliné inférieur (7SI) et appropriés pour coopérer avec des quatrièmes moyens de libération (54) d'un chariot de tri ; le deuxième poste comprenant en outre des troisièmes moyens de libération (73) appropriés pour coopérer avec des troisièmes moyens de contrôle (53) d'un chariot de tri lorsque ledit chariot s'approche du deuxième poste, **caractérisé en ce que** ledit plan incliné (7SI) est maintenu dans sa position d'inclinaison minimum au moyen d'un ressort de suspension respectif et est pivoté horizontalement afin d'augmenter son inclinaison du fait de l'effet du poids des contenants respectivement vides (91) placés sur celui-ci contre la poussée dudit ressort de suspension ; les troisièmes moyens de libération (73) étant dans une position de coopération avec des troisièmes moyens de contrôle (53) respectifs dudit chariot de tri lorsque des contenants vides (91) sont chargés sur le plan incliné (7SI) respectif.

5. Deuxième poste (7) selon la revendication 4, comprenant en outre :
- une goulotte d'échange (80), dans le voisinage de la ligne d'assemblage, articulée sur le cadre afin d'adopter deux positions :
- une première position dans laquelle elle est le prolongement idéal du troisième plan supérieur (7SS),
- une deuxième position dans laquelle elle est le prolongement idéal du troisième plan inférieur (7SI),
- des moyens d'activation (84, 86, 83) de la goulotte d'échange (80) appropriés pour placer un contenant vidé (93) sur le troisième plan incliné inférieur (7SI).

6. Deuxième poste (7) selon la revendication 5, dans lequel lesdits moyens d'activation (84, 86, 83) de la goulotte d'échange (80) sont entraînés par une pédale (83).

7. Deuxième poste (7) selon la revendication 5, comprenant en outre des moyens d'arrêt (93, 82) du déplacement en avant d'un contenant plein (90) suivant jusqu'à ce que la goulotte d'échange (80)soit libre.

8. Deuxième poste (7) selon la revendication 5, comprenant en outre des guides de retour (97) appropriés pour coopérer avec des douilles de retour (98) dudit au moins un chariot de tri (5) afin de garantir un alignement parfait entre le deuxième poste (7) et le chariot (5).

9. Système d'avance de composants d'au moins une ligne d'assemblage, dans lequel les composants sont triés dans des contenants (90, 91) comprenant :
- au moins un premier poste (3) placé dans une zone d'entrepôt ou sur le côté de celle-ci,
- au moins un deuxième poste (7) placé le long d'une ligne d'assemblage, ou sur le côté de celle-ci,
- au moins un chariot de tri (5) pouvant être déplacé entre ledit premier poste (3) et ledit deuxième poste (7), dans lequel
- ledit au moins un premier poste (3) comprend un premier plan incliné supérieur (3SS),
- ledit au moins un chariot de tri (5) comprend un deuxième plan incliné supérieur (5SS),
- ledit au moins un deuxième poste (7) comprend un troisième plan incliné supérieur (7SS),
lesdits plans inclinés supérieurs (3SS, 5SS, 7SS), définissant idéalement un trajet incliné continu unique, lorsque le chariot de tri (5) s'approche des postes (3, 7), adapté pour être parcouru par lesdits contenants pleins de composants à utiliser dans la ligne d'assemblage, par la force de gravité,
et dans lequel
- ledit au moins un premier poste (3) comprend un premier plan incliné inférieur (3SI),
- ledit au moins un chariot de tri (5) comprend un deuxième plan incliné inférieur (5SI),
- ledit au moins un deuxième poste (7) comprend un troisième plan incliné inférieur (7SI),
lesdits plans inclinés inférieurs (3SI, 5SI, 7SI) définissant idéalement un trajet incliné continu unique, lorsque le chariot de tri (5) s'approche des postes (3, 7), adapté pour être parcouru par des contenants vides à remplir dans l'entrepôt, par la force de gravité,
ledit premier poste (3) comprenant des premiers moyens de contrôle (32) appropriés pour empêcher un glissement gênant des contenants pleins (90) du plan incliné supérieur (3SS) ; les moyens de contrôle (32) étant appropriés pour coopérer avec les premiers moyens de libération (73) du chariot de tri lorsque ledit chariot s'approche dudit premier poste, et des deuxièmes moyens de libération (31), **caractérisé en ce que**, lorsque des contenants pleins (90) sont positionnés correctement sur le plan incliné supérieur (3SS) du premier poste (3), ce dernier pivote, grâce à l'action d'un ressort de suspension, déterminant un positionnement des moyens de libération (31) approprié pour coopérer avec des deuxièmes moyens de contrôle (51) respectifs du chariot (5) appropriés pour maintenir les contenants vides (91) sur le plan incliné inférieur (5SI) du chariot.

10. Système selon la revendication 9, dans lequel ledit chariot de tri (5) est selon l'une quelconque des revendications 1 à 3.

11. Système selon l'une quelconque des revendications 9 et 10, dans lequel ledit deuxième poste (7) est selon l'une quelconque des revendications 4 à 8.

12. Procédé de mise en oeuvre d'un système selon les revendications 9 à 11, comprenant au moins les étapes suivantes en une séquence cyclique :
- de remplissage de contenants pour les remplir et les placer sur ledit premier plan supérieur (3SS), lorsqu'un chariot de tri (5) s'approche dudit au moins un premier poste (3) et contient des contenants vides (91) sur un deuxième plan inférieur (5SI) respectif,
- d'échange simultané des contenants vides (91) et pleins (90) entre ledit au moins un premier poste et ledit chariot de tri,
- de déplacement du chariot de tri (5) et son approche d'au moins un deuxième poste (7), lorsque le chariot s'approche dudit au moins un deuxième poste (7), si ce dernier contient des contenants vides, sur un troisième plan inférieur (7SI)respectif,
- d'échange simultané des contenants vides (91) et pleins (90) entre ledit chariot de tri et ledit deuxième poste,
- de commande de l'approche du chariot de tri (5) d'au moins un premier poste (3).
